# EUROPÄISCHE PATENTANMELDUNG

(11) **EP 3 586 683 A1**
(43) Veröffentlichungstag der Anmeldung: **01.01.2020**
(21) Anmeldenummer: 19180211.5
(22) Anmeldetag: 14.06.2019
(51) Int. Cl.: A47D 1/02, A47D 1/06, A47D 1/08, A47D 9/04, A47D 13/10, A47D 11/00, A47D 1/04, A47D 1/00, B62B 13/06

(54) **LIEGE- ODER SITZEINRICHTUNG, GESTELL, ADAPTEREINRICHTUNG UND SYSTEM MIT EINER LIEGE- ODER SITZEINRICHTUNG UND EINEM GESTELL**

(30) Priorität: 29.06.2018 DE 102018115731
(71) Anmelder: Schiel GmbH, 96465 Neustadt bei Coburg (DE)
(72) Erfinder: Westlin, Martin, 96465 Neustadt bei Coburg (DE); Heinemann, Klaus, 96465 Neustadt bei Coburg (DE)
(74) Vertreter: Pröll, Jürgen

(57) **Zusammenfassung**

Es werden eine Liege- oder Sitzeinrichtung, ein
Gestell (50; 90), eine Adaptereinrichtung und ein System mit einer Liege- oder Sitzeinrichtung und einem Gestell (50; 90) beschrieben, wobei die Liege- oder Sitzeinrichtung über erste Adapterelemente (30) mit dem Gestell (50; 90) über dessen zweite Adapterelemente (70) verbunden werden kann. In weiteren Ausführungen können die Liege- oder Sitzeinrichtung und das Gestell (50; 90) über die Adaptereinrichtung miteinander verbunden werden, wobei die dafür erforderlichen Komponenten derart ausgebildet sind, dass eine einhändige Bedienung möglich ist und eine Umwandlung für verschiedene Nutzungsmöglichkeiten erreicht wird.

## Beschreibung

Es werden eine Liege- oder Sitzeinrichtung, ein Gestell, eine Adaptereinrichtung und System mit einer Liege- oder Sitzeinrichtung und einem Gestell beschrieben, wobei die Liege- oder Sitzeinrichtung mit dem Gestell zur Bereitstellung verschiedener Vorrichtungen kombiniert werden kann.

Die Liege- oder Sitzeinrichtung kann bspw. ein Schlafkorb für Kleinkinder und Babys oder ein Kindersitz sein, beispielsweise in Form eines Babyträgers. Die Liege- oder Sitzeinrichtung kann auch einen Sitz umfassen, der zur Verwendung in Kraftfahrzeugen als Fahrzeugsitz mit einem Sitz eines Kraftfahrzeugs verbindbar ist.

### Stand der Technik

Es sind verschiedene Einrichtungen bekannt, die eine Verwendung von Kinderstühlen für verschiedene Zwecke angeben. Hierzu sind sogenannte Mehrzweckstühle bekannt, die beispielsweise für einen Kinderwagen oder als Schaukel umgebaut bzw. verwendet werden können.

Aus DE 818 090 B ist beispielweise ein Mehrzweckstuhl bekannt, der einen Stuhl umfasst, welcher über Schrauben und weitere Befestigungsmittel mit verschiedenen Untergestellen zur Bereitstellung verschiedener Funktionen verbunden werden kann.

DE 1 870 547 U offenbart ferner eine Klemmvorrichtung mit gebogenen Rohren zur Erstellung von Schaukelstühlen und Schlitten, wobei an dem Rohr mittels eines verstellbaren Zwischenstücks Verstrebungsleisten befestigt sind, deren Klemmwirkung über Flügelschrauben erreicht wird.

Sämtliche aus dem Stand der Technik bekannten Einrichtungen, insbesondere Mehrzweckstühle, weisen den Nachteil auf, dass die Befestigung auf verschiedenen Gestellen mehrere Handgriffe erforderlich macht. Oftmals müssen Befestigungselemente, wie beispielsweise Flügelschrauben, auf eine Schraube aufgesetzt und verdreht werden.

Die bekannten Einrichtungen ermöglichen daher keine einhändige Bedienung bzw. einen einfachen Umbau.

### Aufgabe

Zur Verbesserung der Bedienbarkeit und Vereinfachung solcher Systeme ist es Aufgabe, eine Lösung anzugeben, welche die Probleme des Stands der Technik behebt und dabei sehr einfach ausgebildet ist.

### Lösung

Die vorstehend genannte Aufgabe wird durch eine Liege- oder Sitzeinrichtung für Babys oder Kleinkinder gelöst, aufweisend einen Liege- und/oder Sitzabschnitt und einen Befestigungsabschnitt, wobei der Befestigungsabschnitt zwei gegenüberliegende erste Adapterelemente aufweist, die sich im Bereich des Schwerpunkts des Liege- oder Sitzabschnitts befinden und mit zweiten Adapterelementen eines Gestells verbindbar sind.

Die ersten Adapterelemente ermöglichen das Aufsetzen auf zweite Adapterelemente eines Gestells, wobei hierüber eine sichere Befestigung bereitgestellt wird. Die ersten Adapterelemente sind hierzu so ausgebildet, dass durch das Aufsetzen auf die zweiten Adapterelemente automatisch eine Arretierung erfolgt. Es ist daher nicht notwendig, Befestigungselemente wie Schrauben oder Bügel anzubringen oder zu bewegen.

Die ersten Adapterelemente können zusätzlich drehbar am Befestigungsabschnitt angeordnet sein, wobei die Drehachse im Wesentlichen im Bereich des Schwerpunkts des Liege- oder Befestigungsabschnitts verläuft. Über die drehbar gelagerten Adapterelemente kann eine Veränderung der Ausrichtung des Liege- und/oder Sitzabschnitts erreicht werden, wenn sich die Liege- oder Sitzeinrichtung auf einem Gestell befindet.

Die ersten Adapterelemente können jeweils Aufnahmen für Führungselemente der zweiten Adapterelemente und/oder einer Adaptereinrichtung und Aufnahmen für Befestigungselemente der zweiten Adapterelemente und/oder einer Adaptereinrichtung aufweisen. Die verschiedenen Aufnahmen ermöglichen die Aufnahme verschiedenartig ausgebildeter Elemente der zweiten Adapterelemente, wobei über die Führungselemente in erster Linie keine Arretierung erreicht wird. Eine Verriegelung bzw. Arretierung im verbundenen Zustand eines ersten Adapterelementes und eines zweiten Adapterelementes erfolgt über die Aufnahmen für die Befestigungselemente und die Befestigungselemente der zweiten Adapterelemente.

Die Aufnahmen für die Befestigungselemente können hierzu Arretierungsabschnitte aufweisen. Die Arretierungsabschnitte können so ausgebildet sein, dass diese einen Hinterschnitt zur Aufnahme von Haken oder ähnlichen Elementen aufweisen. Auch können in den Aufnahmen für die Befestigungselemente federgelagerte Mittel vorgesehen sein. Die Ausbildung der Mittel kann derart sein, dass in der verriegelten Stellung eine ausreichende Haltekraft bereitgestellt wird, sodass die Liege- oder Sitzeinrichtung nicht von dem Gestell über deren zweite Adapterelemente abgezogen werden kann. Nach dem Überwinden einer erforderlichen Mindestkraft können die Mittel jedoch die Befestigungselemente freigeben, sodass ein Abheben der Liege- oder Sitzeinrichtung erreicht wird. Die erforderliche Kraft zum Abheben der Liege- oder Sitzeinrichtung kann durch entsprechende Auswahl der verwendeten Materialien und Dimensionierung der Befestigungselemente festgelegt werden. In einer solchen Ausführung ist es möglich, die Liege- oder Sitzeinrichtung einhändig von einem Gestell abzuheben. In weiteren Ausführungen kann es erforderlich sein, das Gestell zum Abheben der Liege- oder Sitzeinrichtung zu halten oder zu fixieren. Die Ausbildung der ersten Adapterelemente und in korrespondierender Weise der zweiten Adapterelemente an einem Gestell lassen ein Anheben der Liege- oder Sitzeinrichtung nach oben hin zu. Es wird jedoch verhindert, dass durch seitlich auf die Liege- oder Sitzeinrichtung wirkende Kräfte ein Loslösen der Liege- oder Sitzeinrichtung von einem Gestell erreicht werden kann. Vor allem bei Liege- oder Sitzeinrichtungen für Babys und Kleinkinder ist eine solche Arretierung ausreichend, um einen Schutz für das Kind bereitzustellen.

Die Liege- oder Sitzeinrichtung kann beispielsweise durch einen Kindersitz oder einen Babyträger, sowie einen Schlafkorb gebildet werden.

In einer Ausführungsform der Erfindung ist die Liege- oder Sitzeinrichtung nicht für die Verwendung bei Fahrzeugen vorgesehen, da über die Ausbildung der ersten und zweiten Adapterelemente keine ausreichende Verriegelung bei Unfällen bereitgestellt werden kann. Der Vorteil der sicheren Verriegelung ohne zusätzliche Elemente alleine durch ein Aufsetzen der Liege- oder Sitzeinrichtung, wodurch beispielsweise ein einhändiges Aufsetzen und Abheben möglich ist, ist für die Verwendung bei Kraftfahrzeugen nicht geeignet, da keine ausreichende Sicherung gegeben ist. Um die Liege- oder Sitzeinrichtung auch bei Kraftfahrzeugen verwenden zu können, können die ersten Adapterelemente zusätzliche Arretierungsmittel aufweisen. Alternativ können die Aufnahmen der ersten Adapterelemente so ausgebildet sein, dass diese auch eine sichere Verriegelung, beispielsweise über eine Basis für einen Kindersitz, der fest in einem Fahrzeug montiert ist, ermöglichen. Da die Befestigungselemente dann an der Basis angeordnet sind, kann kein Anheben zum Lösen der Verriegelung über die ersten Adapterelemente der Liege- oder Sitzeinrichtung erfolgen, weil zuerst eine Betätigung von Verriegelungselementen an der Basis zum Freigeben durchgeführt werden muss.

Die vorstehend genannte Aufgabe wird auch durch ein Gestell gelöst, das dazu ausgebildet ist, mit einer Liege- oder Sitzeinrichtung verbunden zu werden, aufweisend eine Rahmenanordnung und einen Befestigungsabschnitt, wobei der Befestigungsabschnitt zwei gegenüberliegende zweite Adapterelemente aufweist, die sich im Bereich einer Schwerpunktebene des Gestells befinden und mit ersten Adapterelementen einer Liege- oder Sitzeinrichtung verbindbar sind.

Das Gestell ist so ausgebildet, dass dieses mit einer Liege- und Sitzeinrichtung verbunden werden kann, wie sie vorstehend beschrieben ist. Die zweiten Adapterelemente sind hierzu korrespondierend zu den ersten Adapterelementen ausgebildet. Das Gestell ermöglicht daher ein Abheben der Liege- oder Sitzeinrichtung nach Überwinden einer Mindestkraft, ohne dass zusätzliche Befestigungselemente entfernt oder Arretierungsmittel betätigt werden müssen. Der Umbau einer Anordnung mit einem Gestell und einer Liege- oder Sitzeinrichtung ist daher deutlich einfacher, als durch die aus dem Stand der Technik bekannten Mehrzweckstühle angegeben, da durch ein Anheben einer Liege- oder Sitzeinrichtung ein Trennen vom Gestell ermöglicht wird.

Das Gestell kann verschiedenartig ausgebildet sein und beispielsweise als Untergestell zur Ausbildung eines Hochstuhls für Kleinkinder oder als rahmenförmige Anordnung zur Ausbildung einer Wippe ausgebildet sein. An die Wippe können in weiteren Ausführungsformen auch eine Schiebevorrichtung und/oder Kufen angebracht werden, sodass ein Schlitten bereitgestellt wird. Vorteilhafterweise kann dann auf dieses Gestell ein Babyträger oder ein Schlafkorb sowie andere Liege- oder Sitzeinrichtungen über die jeweiligen Adapterelemente aufgebracht werden. Der Schlitten kann daher für verschiedene Transporteinrichtungen für Kinder verwendet werden.

Die zweiten Adapterelemente können jeweils Führungselemente und Befestigungselemente aufweisen. Diese sind so ausgebildet, dass eine Befestigung und Führung in den ersten Adapterelementen einer Liege- oder Sitzeinrichtung erfolgt.

Das Gestell kann insbesondere zwei Führungselemente und zwei Befestigungselemente für jedes zweite Adapterelement aufweisen, wobei die beiden Führungselemente und die beiden Befestigungselemente quer zur Schwerpunktebene hintereinander angeordnet sind.

Die beiden Führungselemente und die beiden Befestigungselemente können dabei versetzt zueinander angeordnet sein. Die versetzt angeordnete Ausführung erfolgt in weiteren Ausführungsformen derart, dass die beiden Führungselemente und die beiden Befestigungselemente jeweils auf parallel zueinander ausgerichteten Bahnen angeordnet sind, wobei die Bahnen orthogonal zur Schwerpunktebene verlaufen.

Die Führungselemente können von den zweiten Adapterelementen nach oben abstehen und eine größere Breite wie Tiefe aufweisen. Zudem kann mindestens eine der breiten Seiten eine Schräge aufweisen. Die Ausbildung der Schräge ist derart gewählt, dass diese ausgehend vom Verbindungsabschnitt mit den zweiten Adapterelementen nach oben hin abnimmt.

Die Befestigungselemente können hakenförmig ausgebildet sein. In weiteren Ausführungsformen kann im Übergang von dem Haken zu einem Verbindungsabschnitt der zweiten Adapterelemente ein Einschnitt vorgesehen sein. In den Einschnitt können Mittel innerhalb der Aufnahmen eingreifen und eine zusätzliche Verriegelung bereitstellen. Zudem kann der Einschnitt als Schwächung des Befestigungselements dienen und damit ein Freigeben der Befestigungselemente erleichtern.

Die beiden Führungselemente können zudem an Außenstellen der zweiten Adapterelemente und die beiden Befestigungselemente an Innenstellen der zweiten Adapterelemente angeordnet sein. Dabei können vorzugsweise die beiden Befestigungselemente so ausgebildet sein, dass Haken an den Befestigungselementen an den einander abgewandten Seiten angeordnet sind. Hierüber wird eine verbesserte Verriegelung bereitgestellt, da die Haken in entgegengesetzte Richtungen eine Verriegelung bereitstellen.

Die Rahmenanordnung des Gestells kann aus Kunststoff oder Metall sowie einer Metalllegierung bestehen, wobei die Streben der Rahmenanordnung aus Hohlprofilen bestehen können. Hierüber können leichte Gestelle bereitgestellt werden, die dennoch eine hohe Festigkeit aufweisen.

Die vorstehend genannte Aufgabe wird auch durch eine Adaptereinrichtung zur Verbindung einer Liege- oder Sitzeinrichtung mit einem Gestell gelöst, aufweisend zwei gegenüberliegende und miteinander verbundene dritte Adapterelemente, wobei
- die dritten Adapterelemente einen ersten Befestigungsabschnitt zur Verbindung mit ersten Adapterelementen und einen zweiten Befestigungsabschnitt zur Verbindung mit zweiten Adapterelementen aufweisen,
- der erste Befestigungsabschnitt zwei Führungselemente und zwei Befestigungselemente aufweist, und
- der zweite Befestigungsabschnitt Aufnahmen für Führungselemente der zweiten Adapterelemente und Aufnahmen für Befestigungselemente der zweiten Adapterelemente aufweist.

Die Adaptereinrichtung dient in erster Linie zur Verbindung einer Liege- oder Sitzeinrichtung mit einem Gestell der vorher beschriebenen Varianten. Dementsprechend sind die dritten Adapterelemente so ausgebildet, dass diese eine Verbindung mit den ersten Adapterelementen und den zweiten Adapterelementen bereitstellen, wobei die ersten Befestigungsabschnitte der dritten Adapterelemente analog zu den zweiten Adapterelementen und die zweiten Befestigungsabschnitte der dritten Adapterelemente analog zu den ersten Adapterelementen ausgebildet sind. Die Adaptereinrichtung stellt damit ein Zwischenstück bereit, das eine Verbindung einer Liege- oder Sitzeinrichtung der vorstehend beschriebenen Varianten mit einem Gestell der vorstehend beschriebenen Varianten ermöglicht. Jedoch kann die Adaptereinrichtung insbesondere auch so ausgebildet sein, dass diese eine Verbindung einer Liege- oder Sitzeinrichtung oder eines Gestells der vorhin beschriebenen Varianten mit einer weiteren Liege- oder Sitzeinrichtung oder einem weiteren Gestell bereitstellt. Dementsprechend weist die Adaptereinrichtung mindestens einen Befestigungsabschnitt auf, der zur Verbindung mit den ersten oder zweiten Adapterelementen der Liege- oder Sitzeinrichtung oder dem Gestell ausgebildet ist. Ein weiterer Befestigungsabschnitt ist anderweitig ausgebildet, sodass eine Verbindung mit anderen Systemen möglich wird.

Die Adaptereinrichtung, sowie die ersten und zweiten Adapterelemente der vorstehend beschriebenen Komponenten, können in weiteren Ausführungen vollständig aus Kunststoff gefertigt sein. Dadurch können die Adaptereinrichtungen sämtlicher Ausführungen (erste Adapterelemente, zweite Adapterelemente, dritte Adapterelemente) kostengünstig und schnell, beispielsweise in einem Spritzgussprozess, gefertigt werden.

Die beiden Führungselemente und die beiden Befestigungselemente des ersten Befestigungsabschnitts können versetzt zueinander angeordnet sein. Die Ausbildung und Anordnung der Führungselemente sowie der Befestigungselemente kann analog zu der Ausbildung der zweiten Befestigungsabschnitte eines Gestells erfolgen.

Dabei können die beiden Führungselemente an Außenstellen der dritten Adapterelemente und die beiden Befestigungselemente an Innenstellen der dritten Adapterelemente angeordnet sein. Die vorstehend genannte Aufgabe wird auch durch ein System gelöst, aufweisend eine Liege- oder Sitzeinrichtung der vorstehend beschriebenen Varianten und/oder einem Gestell der vorstehend beschriebenen Varianten, wobei die Liege- oder Sitzeinrichtung über die ersten Adapterelemente mit dem Gestell über dessen zweite Adapterelemente verbunden ist.

In weiteren Ausführungsformen können die ersten Adapterelemente über eine Adaptereinrichtung der vorstehend beschriebenen Varianten mit zweiten Adapterelementen verbunden sein.

In noch weiteren Ausführungsformen kann, wie bereits angegeben, über die Adaptereinrichtung eine Verbindung einer Liege- oder Sitzeinrichtung oder eines Gestells der vorstehend beschriebenen Varianten mit einem anderweitig ausgebildeten Gestell oder einer anderweitig ausgebildeten Liege- oder Sitzeinrichtung erfolgen.

Die Adaptereinrichtung kann hierbei als Verbindungsstück zwischen den hierin beschriebenen Einrichtungen und Einrichtungen anderer Systeme dienen.

Weitere Vorteile, Merkmale sowie Ausgestaltungsmöglichkeiten ergeben sich aus der nachfolgenden Figurenbeschreibung von nicht einschränkend zu verstehenden Ausführungsbeispielen.

### Kurzbeschreibung der Zeichnungen

In den Zeichnungen zeigt:
- Fig. 1: eine perspektivische Darstellung eines Kindersitzes;
- Fig. 2: eine perspektivische Darstellung eines Schlafkorbs;
- Fig. 3: eine perspektivische Darstellung eines Gestells;
- Fig. 4: eine perspektivische Darstellung des Gestells von Fig. 3 in einer Verstauposition;
- Fig. 5: eine perspektivische Darstellung eines Systems mit einem Schlafkorb und dem Gestell von Fig. 3;
- Fig. 6: eine perspektivische Darstellung eines Systems mit einem Kindersitz und dem Gestell von Fig. 3;
- Fig. 7: eine weitere perspektivische Darstellung eines Systems mit einem Kindersitz und dem Gestell von Fig. 3;
- Fig. 8: eine noch weitere perspektivische Darstellung eines Systems mit einem Kindersitz und dem Gestell von Fig. 3;
- Fig. 9: eine perspektivische Darstellung eines weiteren Gestells;
- Fig. 10: eine perspektivische Darstellung eines Systems mit dem Schlafkorb von Fig. 2 und dem Gestell von Fig. 9;
- Fig. 11: eine weitere perspektivische Darstellung des Systems von Fig. 10;
- Fig. 12: eine perspektivische Darstellung eines Systems mit einem Kindersitz und dem Gestell von Fig. 9;
- Fig. 13: eine weitere perspektivische Darstellung des Systems von Fig. 12;
- Fig. 14: eine perspektivische Darstellung des Gestells von Fig. 9 mit einer Schiebevorrichtung und Kufen;
- Fig. 15: eine perspektivische Darstellung eines Systems mit der Anordnung von Fig. 14 und einem Kindersitz;
- Fig. 16: eine perspektivische Darstellung eines Tablets; und
- Fig. 17: eine perspektivische Darstellung eines weiteren Tabletts.

In den Zeichnungen mit gleichen Bezugszeichen versehene Teile entsprechen im Wesentlichen einander, sofern nichts anderes angegeben ist. Darüber hinaus wird darauf verzichtet, Bestandteile zu zeigen und zu beschreiben, welche nicht wesentlich zum Verständnis der hierin offenbarten technischen Lehre sind. Im Weiteren werden nicht für alle bereits eingeführten und dargestellten Elemente die Bezugszeichen wiederholt, sofern die Bestandteile selbst und deren Funktion bereits beschrieben worden oder für einen Fachmann bekannt sind.

### Ausführliche Beschreibung von Ausführungsbeispielen

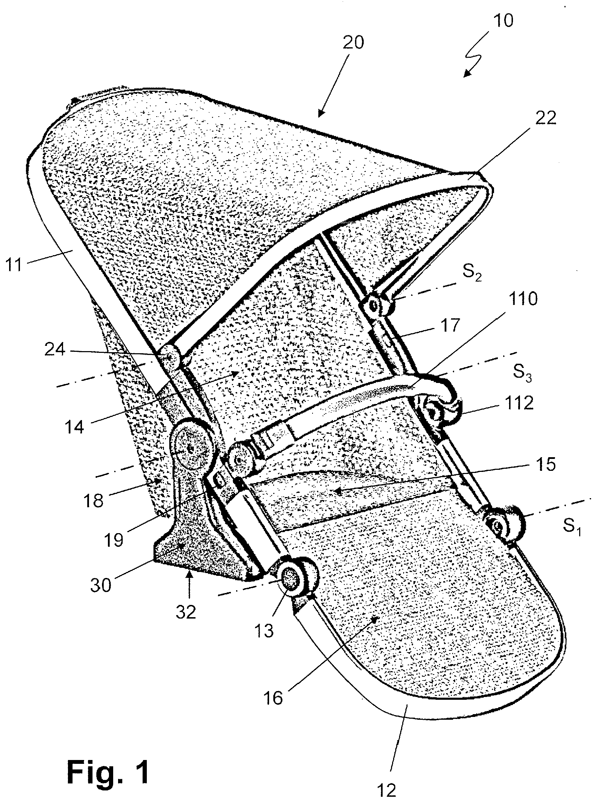

Fig. 1 zeigt eine perspektivische Darstellung eines Kindersitzes 10. Der Kindersitz 10 weist eine Rahmenanordnung mit einem Rahmen 11 und einem Rahmen 12 auf, wobei die Rahmen 11 und 12 U-förmig ausgebildet sind. Der Rahmen 12 ist schwenkbar über Drehlager um die Schwenkachse S₁ mit dem Rahmen 11 verbunden. Über die Betätigung von Knöpfen 13 kann der Rahmen 12 verschwenkt werden. Der Rahmen 12 bildet zusammen mit einem Stoffbezug eine Fußstütze 16. An dem Rahmen 11 befindet sich ein Stoffteil, das einen Sitz 15 und eine Rückenlehne 14 ausbildet.

Zusätzlich ist am Rahmen 11 über Verbindungselemente 17 ein Sonnenschutz 20 angebracht. Der Sonnenschutz 20 weist einen Stoffteil und einen weiteren Rahmen 22 auf. Der Rahmen 22 ist über Schwenklager 24 mit den Verbindungselementen 17 verbunden. Über die Schwenklager 24 kann der Rahmen 22 um die Schwenkachse S₂ verschwenkt werden. Der hintere Abschnitt des Stoffüberzugs für den Sonnenschutz 20 kann über Haken oder andere Befestigungsmittel am oberen Bereich des Rahmens 11 angebracht sein.

Zusätzlich ist am Rahmen 11 über entsprechende Befestigungsmittel ein Bügel 110 angebracht. Der Bügel 110 weist hierzu Befestigungselemente 112 auf, die an ihrem unteren Abschnitt Rastelemente umfassen, welche in Aufnahmen 19 des Rahmens 11 eingebracht werden können.

Die Ausbildung des Kindersitzes 10 kann anders als in den Figuren gezeigt umgesetzt sein. Auch die einzelnen Komponenten können strukturelle Unterschiede aufweisen, ohne vom Kern der hierin beschriebenen technischen Lehre abzuweichen.

Als wesentlicher Bestandteil sind an dem Kindersitz 10 erste Adapterelemente 30 vorgesehen. Die Adapterelemente 30 befinden sich an einem Befestigungsabschnitt 18 des Rahmens 11. Die Adapterelemente 30 sind im Bereich der Schwerpunktachse S₃ des Kindersitzes 10 angeordnet. Die Adapterelemente 30 weisen eine Schwenklagerung auf, sodass diese um die Schwerpunktachse S₃ verschwenkt werden können. In weiteren Ausführungen ist kein Verschwenken der Adapterelemente 30 relativ zum Rahmen 11 möglich. Die Anordnung der Adapterelemente 30 im Bereich der Schwerpunktachse S₃ stellt sicher, dass über die Adapterelemente 30 eine sichere Befestigung auf einem Gestell 50 oder 90 erfolgen kann, ohne dass es zu einem Verkippen aufgrund eines eingesetzten Kindes kommt.

Die Adapterelemente 30 befinden sich an den gegenüberliegenden Seiten des Rahmens 11, wobei in Fig. 1 nur ein Adapterelement 30 gezeigt ist.

Die Adapterelemente 30 weisen Aufnahmebereiche 32 auf, in welche Befestigungselemente 74 und Führungselemente 72 eingesetzt werden können. Über diese Führungselemente 72 und Befestigungselemente 74 erfolgt eine Verriegelung. Die Aufnahmen im Aufnahmebereich 32 der ersten Adapterelemente 30 sind korrespondierend zu den Führungselementen 72 und den Befestigungselementen 74 ausgebildet. Die Ausbildung der Aufnahmen im Aufnahmebereich 32 wird daher in Bezug auf die Ausbildung der zweiten Adapterelemente 70 mit den Führungselementen 72 und den Befestigungselementen 74 erläutert.

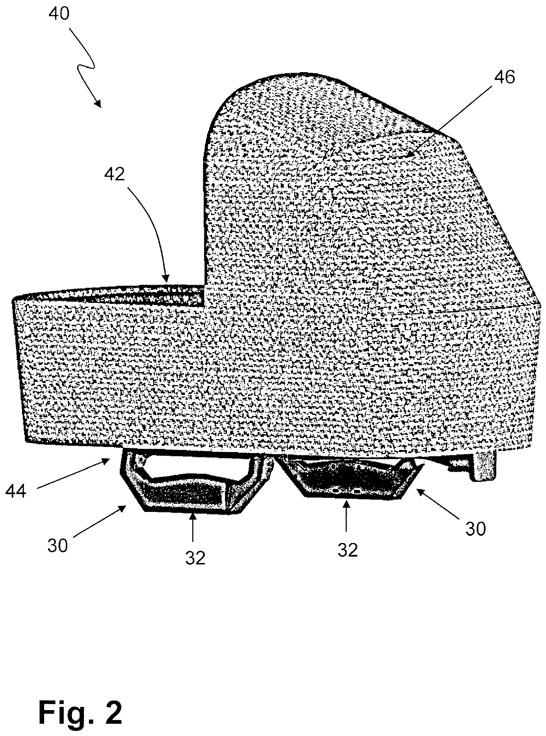

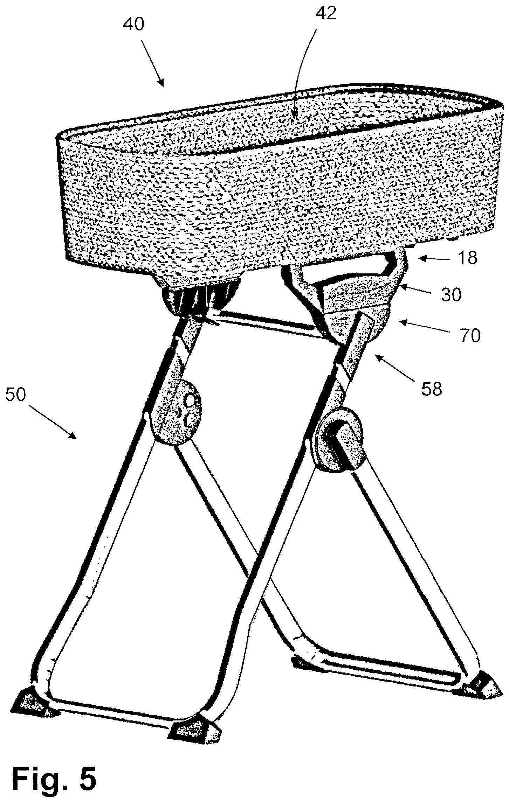

Fig. 2 zeigt eine perspektivische Darstellung eines Schlafkorbs 40. Der Schlafkorb 40 weist einen Korb mit einem Liegeabschnitt 42 auf, in den ein Kind eingelegt werden kann. Zusätzlich weist der Schlafkorb 40 ein Dach 46 auf. Das Dach 46 kann, wie in Fig. 5 gezeigt, abgenommen werden.

An der Unterseite weist der Schlafkorb 40 einen Befestigungsabschnitt 44 auf, an dem wieder erste Adapterelemente 30 angeordnet sind. Diese Adapterelemente 30 unterscheiden sich von der Form von den in Fig. 1 gezeigten Adapterelementen 30, weisen jedoch einen Aufnahmebereich 32 mit Aufnahmen auf, die entsprechend den ersten Adapterelementen 30 von Fig. 1 ausgebildet sind.

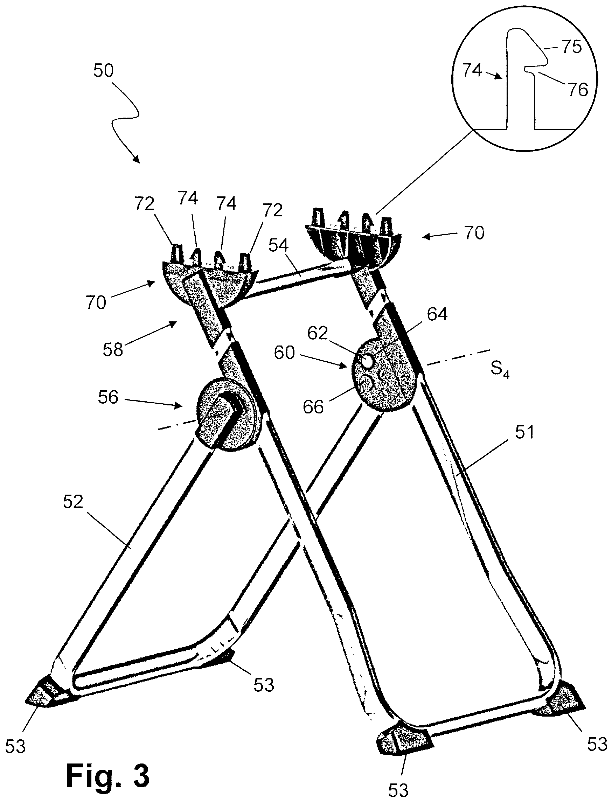

Fig. 3 zeigt eine perspektivische Darstellung eines Gestells 50. Das Gestell 50 weist eine Rahmenanordnung mit einem ersten Rahmen 51 und einem zweiten Rahmen 52 auf, wobei die beiden Rahmen 51 und 52 im Wesentlichen U-förmig ausgebildet sind. Am unteren Ende der Rahmen 51 und 52 befinden sich Fußstützen 53.

Die Rahmen 51 und 52 können aus einem Kunststoff oder einem Metall bzw. einer Metalllegierung bestehen und sind vorzugsweise als Hohlprofilkörper ausgebildet, sodass bei einer hohen Festigkeit und Stabilität ein geringes Gewicht erreicht wird.

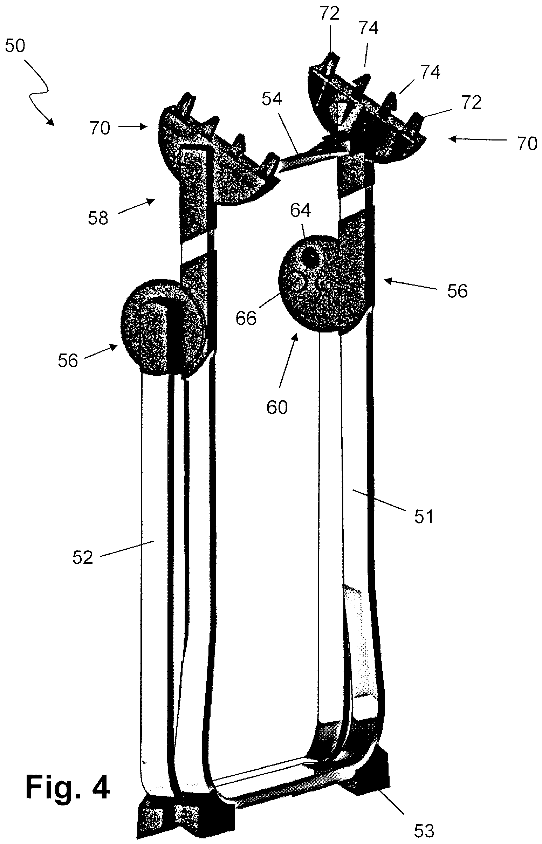

Die Rahmen 51 und 52 sind über Schwenklager 56 miteinander verbunden. Die Rahmen 51 und 52 können daher um die Schwenkachse S₄ zueinander verschwenkt werden, um in eine Verstauposition (siehe Fig. 4) verbracht zu werden. Im Bereich der Schwenklager 56 ist an mindestens einem der Schwenklager 56 eine Arretiervorrichtung 60 angeordnet. Die Arretiervorrichtung 60 umfasst einen Knopf 52, der in einer Öffnung 64 herausragt und damit die in Fig. 3 gezeigte Stellung festlegt. Ein Verschwenken der Rahmen 51 und 52 ist in dem gezeigten Zustand nicht möglich. Der Knopf 62 muss eingedrückt werden, damit ein Verschwenken der Rahmen 51 und 52 möglich ist. Nach dem Eindrücken des Knopfes 62 in die Öffnung 64 muss zugleich ein Verschwenken erfolgen, sodass der Knopf 62 innerhalb der Schwenklager 56 geführt wird. Der Knopf 62 ist federbelastet und drückt dabei gegen die innere Wand im Bereich des Schwenklagers 56. Nachdem der Rahmen 52 und der Rahmen 51 soweit zueinander verschwenkt worden sind, dass eine Endstellung erreicht ist, springt der Knopf 62 über die Federlagerung in eine Aufnahme 66. In dieser Aufnahme 66 ragt der Knopf 62 nicht aus dem Schwenklager 56 hervor. Die Aufnahme 66 stellt eine weitere Arretierposition bereit. Jedoch ist in diesem Zustand der Knopf 62 nicht soweit verlagert, wie über die Öffnung 64, sodass ein Auseinanderziehen der Rahmen 51 und 52 zu einem Weiterführen des Knopfes 62 führt, bis dieser wieder im Bereich der Öffnung 64 über die Federlagerung nach außen gedrückt wird und diese Position so lange aufrecht erhält, bis der Knopf 62 eingedrückt wird.

Der Rahmen 51 weist längere Schenkel als der Rahmen 52 auf und ist über eine Verbindungsstange 54 im Bereich des Befestigungsabschnitts 58 verbunden. Im Befestigungsabschnitt 58 befinden sich zudem zwei zweite Adapterelemente 70. Die zweiten Adapterelemente 70 weisen an ihrem nach oben ragenden Abschnitt jeweils zwei Führungselemente 72 und zwei Befestigungselemente 74 auf. Die Befestigungselemente 74 sind hakenförmig ausgebildet und weisen hierzu an ihrem oberen Ende einen Haken 75 auf. Der Haken 75 geht über einen Einschnitt 76 in einen unteren Abschnitt über, über den eine Verbindung mit dem zweiten Adapterelement 70 besteht. Die Führungselemente 72 erstrecken sich ebenfalls von den zweiten Adapterelementen 70 nach oben und weisen eine größere Breite als Tiefe auf. An den beiden breiten Seiten sind diese schräg ausgebildet. Dies erleichtert ein Einführen, da eine Zentrierung hierüber bereitgestellt wird. Entsprechend sind die Aufnahmen im Aufnahmebereich 32 so ausgebildet, dass diese die Führungselemente 72 in sich aufnehmen können und dabei mit diesen in Anlage kommen. Die Aufnahmen für die Befestigungselemente 74 sind so ausgebildet, dass im oberen Bereich der Aufnahmen im Aufnahmebereich 32 ein Hinterschnitt ausgebildet ist oder ein federndes Mittel (z. B. federgelagertes Druckstück oder Hebel) in die Aufnahme ragt, sodass nach dem Überfahren dieses Mittels der Haken 75 das Mittel oder den Hinterschnitt hintergreift.

Die Verriegelung des Kindersitzes 10 oder des Schlafkorbs 40 über die ersten Adapterelemente 30 auf den zweiten Adapterelementen 70 erfolgt daher durch ein Aufsetzen der ersten Adapterelemente 30 auf die zweiten Adapterelemente 70. Die Befestigungselemente 74 gleiten innerhalb der Aufnahmen in den Verriegelungsabschnitt, wobei eine Führung über die Führungselemente 72 erfolgt, die in korrespondierend ausgebildeten Aufnahmen entlanggleiten. Die hakenförmige Ausbildung der Befestigungselemente 74 unterstützt beim Einführen der Befestigungselemente 74 in die entsprechenden Aufnahmen im Aufnahmebereich 32 eine Verlagerung eines federgelagerten Mittels. Nach dem Überfahren dieser Mittel springen diese in ihre Ausgangsstellung zurück und hintergreifen den unteren Abschnitt des Hakens 75. Anschließend ist ein Kindersitz 10 oder ein Schlafkorb 40 gesichert auf dem Gestell 50 gelagert. Eine seitliche Bewegung des Kindes kann daher nicht zu einem Lösen der Verbindung führen. Ein Lösen der Verbindung kann nur über ein Anheben des Kindersitzes 10 oder des Schlafkorbs 40 erreicht werden. Um auch dies zu erreichen, muss erst eine Mindestkraft aufgebracht werden, um ein Verschwenken der Haken 75 der Befestigungselemente 74 über den Einschnitt 76 zu erreichen. In alternativen Ausführungsformen können auch zusätzliche Mittel vorgesehen sein, die eine Entnahme durch Betätigung eines Entriegelungselements unterstützen.

In der gezeigten Ausführungsform sind die ersten Adapterelemente 30 und die zweiten Adapterelemente 70 so ausgebildet, dass allein das Überschreiten einer Mindestkraft ausreicht, um die Verbindung zu lösen. Die hierin gezeigten Ausführungsformen eignen sich daher nicht für Kraftfahrzeuge, sondern lediglich für die Verwendung als Kindersitz oder als Transportmittel, wie beispielsweise eines Schlittens.

Die Gewichtskraft des Kindersitzes 10 oder des Schlafkorbs 40 sowie zusätzlich eines darin aufgenommenen Kindes sind ausreichend, um über die hakenförmige Ausbildung der Befestigungselemente 74 eine zuverlässige Verriegelung bereitzustellen. Eine seitliche Verlagerung kann daher auch nicht zu einem lösenden Verbindung führen, sodass es für ein Kleinkind oder Baby nicht möglich ist, den Kindesitz 10 oder den Schlafkorb 40 von dem Gestell 50 zu entfernen.

Fig. 4 zeigt die perspektivische Darstellung des Gestells 50 von Fig. 3 in einer Verstauposition, wobei die Rahmen 51 und 52 im Wesentlichen parallel zueinander verlaufen. In Fig. 4 ist die Ausbildung der zweiten Adapterelemente 70 sichtbar, die aus Kunststoff bestehen und zur Bereitstellung einer hohen Festigkeit innenliegend eine versteifende Struktur aufweisen. Die zweiten Adapterelemente 70 sind wie die ersten Adapterelemente 30 vollständig aus einem Kunststoff gefertigt und weisen daher ein geringes Gewicht auf. Zusätzlich können diese daher in hoher Stückzahl kostengünstig, beispielsweise in einem Spritzgussprozess, gefertigt werden. Die Adapterlösung ist daher wesentlich einfacher und kostengünstiger als aus dem Stand der Technik bekannte Systeme.

Fig. 5 zeigt eine perspektivische Darstellung eines Systems mit einem Schlafkorb 40 und dem Gestell 50, wobei der Schlafkorb 40 über die ersten Adapterelemente 30 auf den zweiten Adapterelementen 70 aufgesetzt und hierüber verriegelt ist.

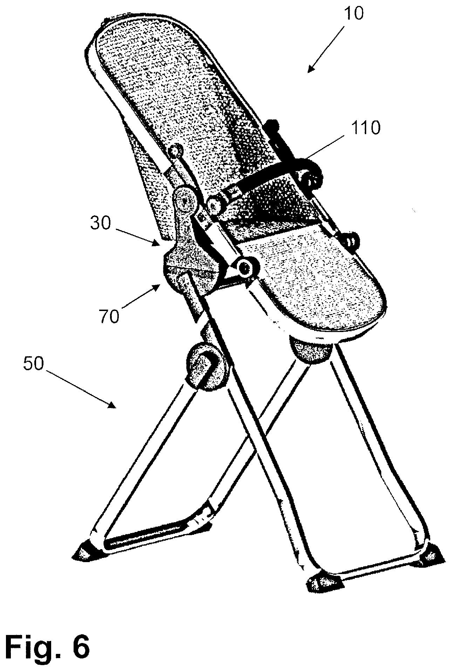

Fig. 6 zeigt eine perspektivische Darstellung eines Systems mit einem Kindersitz 10 und dem Gestell 50, wobei der Kindersitz 10 ohne den Sonnenschutz 20 dargestellt ist. Auch in dieser Ausführung wird eine sichere Verriegelung über die Ausbildung der ersten Adapterelemente 30 und der zweiten Adapterelemente 70 erreicht.

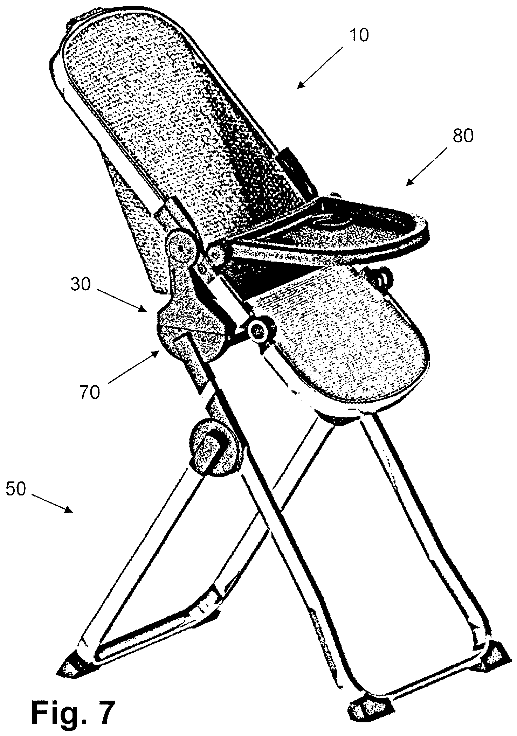

Fig. 7 zeigt eine weitere perspektivische Darstellung eines Systems mit dem Kindersitz 10 und dem Gestell 50 von Fig. 3, wobei anstelle des Bügels 110 ein Tablett 80 an dem Rahmen 11 befestigt ist. Das Tablett 80 weist hierzu Befestigungselemente 84 auf, die in die Aufnahmen 19 des Rahmens 11 eingesetzt werden. Federbelastete Haken 86 des Tabletts 80 werden beim Einsetzen in die Aufnahmen 19 zusammengedrückt und kehren im Bereich der im Rahmen 11 vorgesehenen Öffnung der Aufnahmen 19 wieder in ihre ursprüngliche Position zurück und verriegeln das Tablett 80. Ein Lösen des Tabletts 80 erfolgt daher analog zu einem Lösen des Bügels 110, wobei die federbelasteten Haken 86 gleichzeitig über eine Bedienperson eingedrückt werden und das Tablett 80 entgegen der Einschubrichtung aus den Aufnahmen 19 herausgezogen wird.

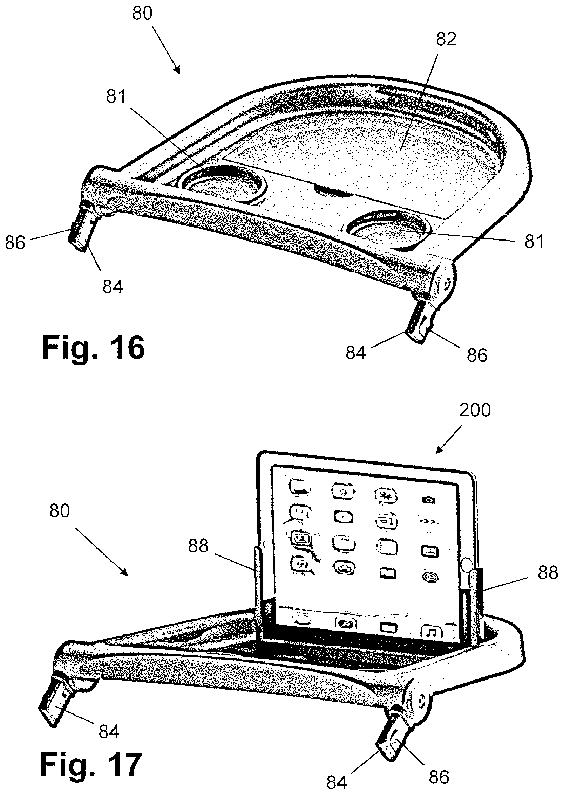

Die Ausbildung des Tabletts 80 wird unter Bezug auf die Figuren 16 und 17 nachfolgend erläutert.

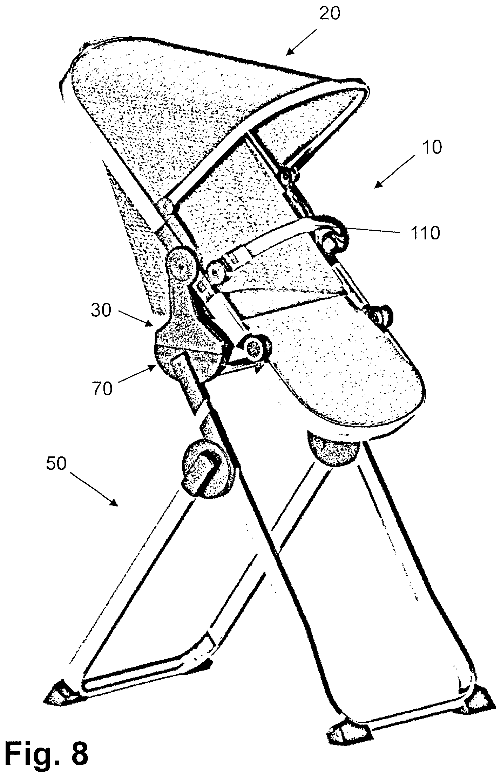

Fig. 8 zeigt schließlich eine noch weitere perspektivische Darstellung eines Systems mit dem Kindersitz 10 und dem Gestell 50, wobei anstelle des Tabletts 80 der Bügel 110 in den Aufnahmen 19 aufgenommen und der Sonnenschutz 20 am Kindersitz 10 angeordnet ist.

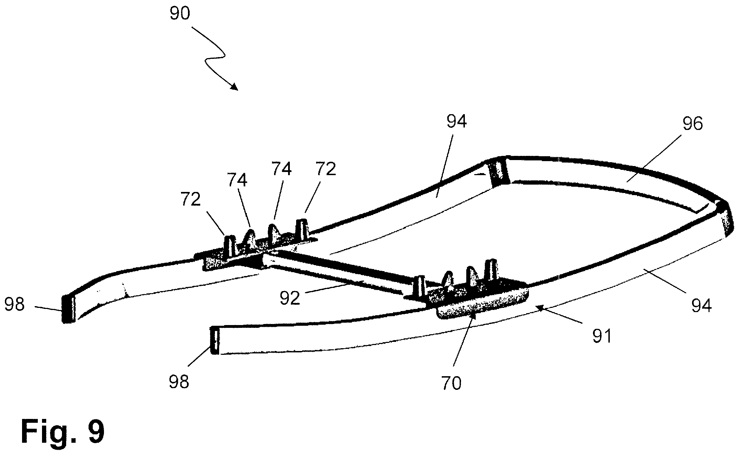

Fig. 9 zeigt eine perspektivische Darstellung eines weiteren Gestells 90. Das Gestell 90 weist eine Rahmenanordnung mit einem im Wesentlichen U-förmig gebogenen Rahmen auf. Die Rahmenanordnung umfasst hierzu zwei gegenüberliegende Holme 94 und einen Verbindungsholm 96. Zusätzlich weist die Rahmenanordnung einen Befestigungsabschnitt 91 auf, in dem zweite Adapterelemente 70 angeordnet sind. Die zweiten Adapterelemente 70 weisen Aufnahmen für eine Verbindungsstange 92 auf. Die Verbindungsstange 92 ist über die fest am Befestigungsabschnitt 91 angeordneten zweiten Adapterelemente 70 mit der Rahmenanordnung verbunden.

Die Holme 94 und der Verbindungsholm 96 sind als Hohlprofile ausgebildet und bestehen Vorzugsweise aus einem Metall oder einer Metalllegierung. In alternativen Ausführungen können die Holme auch aus einem Kunststoff bestehen.

An den vorderen freien Enden der Holme 94 befinden sich Kupplungselemente 98. Kupplungselemente 98 können beispielsweise durch Öffnungen gebildet sein, in welche Einsätze zur Verbindung, beispielsweise mit einer Schiebevorrichtung 100, eingebracht werden können. In weiteren Ausführungsformen können die Kupplungselemente 98 auch Magnete umfassen. Im Weiteren können auch Befestigungsabschnitte die freien Ende der Holme 94 sowie die Kupplungselemente 98 umgreifen.

Die Holme 94 weisen eine gekrümmte Form auf, sodass über das Gestell 90 eine Wippe bereitgestellt werden kann. Die Ausbildung der Krümmung und die Anordnung der zweiten Adapterelemente 70 legt dabei fest, in wie weit ein Wippen bzw. Schaukeln hierüber möglich ist.

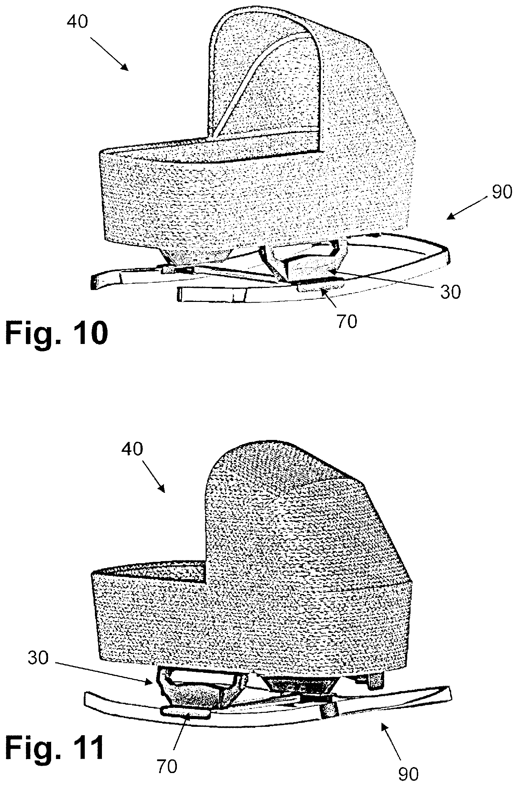

Fig. 10 zeigt eine perspektivische Darstellung eines Systems mit dem Schlafkorb 40 von Fig. 2 und dem Gestell 90 von Fig. 9. Über die ersten Adapterelemente 30 des Schlafkorbs 40 ist dieser auf den zweiten Adapterelementen 70 des Gestells 90 fest mit diesem verbunden.

Fig. 11 zeigt eine weitere perspektivische Darstellung des Systems von Fig. 10 in einer Rückansicht.

Um den Schlafkorb 40 oder den Kindersitz 10 von dem Gestell 90 oder dem Gestell 50 zu entfernen, kann es zusätzlich erforderlich sein mit dem Fuß den Verbindungsholm 96 oder die Holme 94 sowie einen unteren Abschnitt der Rahmen 51 und 52 zu belasten und gleichzeitig den Kindersitz 10 oder den Schlafkopf 40 anzuheben. Dadurch kann eine Verbindung über die Adapterelemente 30 und 70 bereitgestellt werden, ohne dass es zu einem Anheben der Gestelle 50 und 90 kommt, wenn der Kindersitz 10 oder der Schlafkorb 40 abgenommen werden.

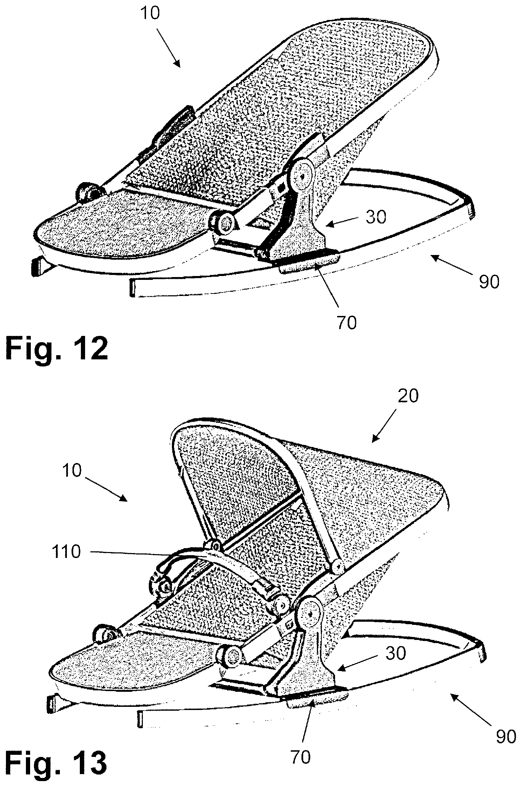

Fig. 12 zeigt eine perspektivische Darstellung eines Systems mit dem Kindersitz 10 und dem Gestell 90 von Fig. 9, wobei der Kindersitz 10 ohne einen Bügel 110 und ohne den Sonnenschutz 20 gezeigt ist.

Fig. 13 zeigt eine weitere perspektivische Darstellung des Systems von Fig. 12, wobei zusätzlich der Bügel 110 und der Sonnenschutz 20 am Kindersitz 10 angebracht sind.

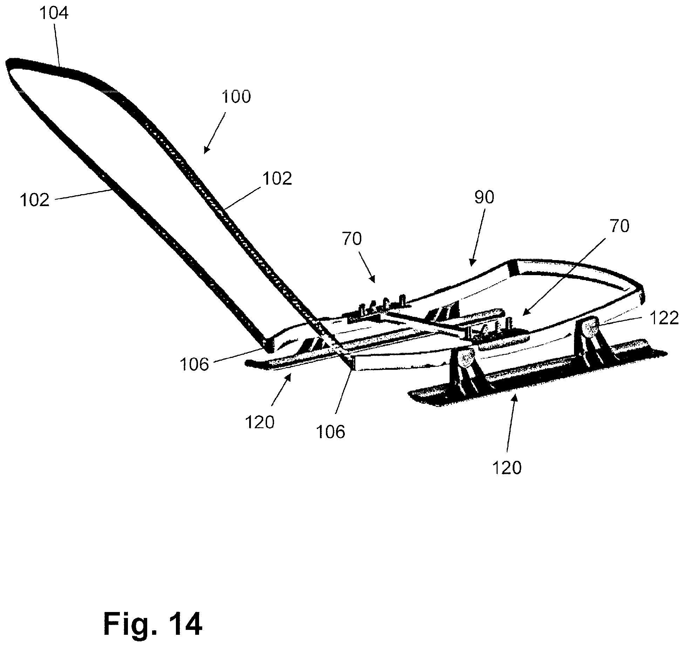

Fig. 14 zeigt eine perspektivische Darstellung des Gestells 90 von Fig. 9 mit einer Schiebevorrichtung 100 und Kufen 120. Das Gestell 90 kann durch die Anordnung der Kufen 120 an den Holmen 94 über Verbindungselemente 122 zu einem Schlitten umgebaut werden. Die Anbringung der Kufen 120 kann verschiedenartig erfolgen. Hierzu können die Verbindungselemente 122 so ausgebildet sein, dass eine Schnappverbindung über entsprechende Öffnungen in den Holmen 94 erreicht wird. In alternativen Ausführungsformen kann auch ein Verklemmen oder Aufnehmen von Elementen in den Verbindungselementen 122 erfolgen, wobei diese Elemente an den Holmen 94 angeordnet sind.

Im Bereich der Kupplungselemente 98 sind Einsätze 106 vorgesehen, welche eine Verbindung der Schiebevorrichtung 110 mit dem Gestell 90 bereitstellen. Die Schiebevorrichtung 100 weist zwei gegenüberliegende Streben 102 auf, die über eine Verbindungsstrebe 104 miteinander verbunden sind. Die Verbindungsstrebe 104 kann als Schiebegriff zum Schieben oder Ziehen der Schlittenanordnung ausgebildet sein und zusätzlich Griffelemente oder Schaumstoffe aufweisen.

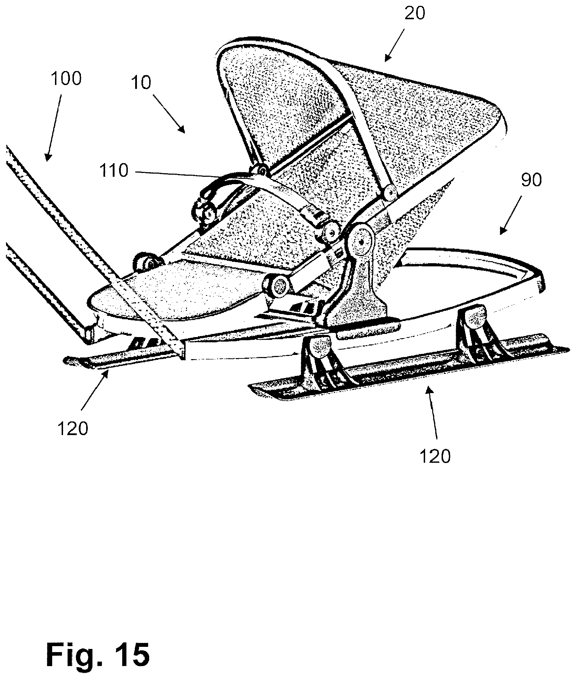

Fig. 15 zeigt eine perspektivische Darstellung eines Systems mit der Anordnung von Fig. 14 und dem Kindersitz 10. Anstelle des Kindersitzes 10 kann auch ein Schlafkorb 40 über die entsprechenden ersten Adapterelemente 30 auf die zweiten Adapterelemente 70 des Gestells 90 aufgesetzt und hierüber gesichert werden.

Der Vorteil der hierin beschriebenen Arretierung über die ersten Adapterelemente 30 und die zweiten Adapterelemente 70 besteht darin, dass durch das in den Kindersitz 10 oder dem Schlafkopf 40 aufgenommen Kind keine Lösung der Verbindung möglich ist. Zudem ist die Verbindung derart, dass auch leichtere Erschütterungen usw. nicht zu einer Lösung führen können. Ein Grund liegt darin, dass das Lösen nur durch ein Anheben des Kindersitzes 10 oder des Schlafkorbs 40 möglich ist. Ohne zusätzliche Fremdeinwirkung ist dies bei einem sachgemäßen Gebrauch nicht möglich.

Die ersten Adapterelemente 30 und die zweiten Adapterelemente 70 können hierzu auch aus einem Kunststoff gefertigt werden, wodurch die Kosten und die Herstellung wesentlich vereinfacht sind. Auf zusätzliche Befestigungsmittel wie Schrauben, Hebel und andere Klemmvorrichtungen, wie sie im Stand der Technik beschrieben werden, kann daher verzichtet werden. Dies bietet den Vorteil, dass ein einhändiges Aufsetzen und Abheben der Kindersitze 10 oder Schlafkörbe 40 möglich ist.

Fig. 16 zeigt eine perspektivische Darstellung des Tabletts 80, wobei an den gegenüberliegenden Enden im Bereich des Befestigungsabschnitts des Tabletts 80 die Befestigungselemente 84 angeordnet sind, welche federbelastete Haken 86 umfassen. Die federbelasteten Haken 86 werden beim Einsetzen der Befestigungselemente 84 in die Aufnahme 19 zusammengedrückt und springen dann in ihre Ausgangslage zurück, wenn das Tablett 80 ordnungsgemäß eingesetzt ist. Das Tablett 80 weit zwei Aufnahmen 81 für Becher oder Trinkflaschen und eine Schale 82 auf. Das Tablett 80 besteht aus Kunststoff und weist daher ein geringes Gewicht auf. Zudem sind Kunststoffe leicht zu reinigen und bieten keine Verletzungsmöglichkeiten für Kleinkinder.

Schließlich zeigt Fig. 17 eine perspektivische Darstellung eines weiteren Tabletts 80. Das Tablett 80 weist anstelle der Schale 82 und der Aufnahmen 81 Haltearme 88 auf. Die Haltearme 88 gehören zu einer verschwenkbar gelagerten Einrichtung. Die verschwenkbar gelagerte Einrichtung dient zur Aufnahme eines Tablet-Computers 200 oder eines anderen Gegenstands oder Einrichtung, die entsprechend so ausgebildet sind, dass dies zwischen den Haltearmen 88 gehalten werden können. Beispielsweise kann über die Haltearme 88 auch ein Spielzeug gehalten werden.

### Bezugszeichenliste

- 10: Kindersitz
- 11: Rahmen
- 12: Rahmen
- 13: Knopf
- 14: Rückenlehne
- 15: Sitz
- 16: Fußstütze
- 17: Verbindungselement
- 18: Befestigungsabschnitt
- 19: Aufnahme
- 20: Sonnenschutz
- 22: Rahmen
- 24: Schwenklager
- 30: erstes Adapterelement
- 32: Aufnahmebereich
- 40: Schlafkorb
- 42: Liegeabschnitt
- 44: Befestigungsabschnitt
- 46: Dach
- 50: Gestell
- 51: Rahmen
- 52: Rahmen
- 53: Fußstütze
- 54: Verbindungsstange
- 56: Schwenklager
- 58: Befestigungsabschnitt
- 60: Arretiervorrichtung
- 62: Knopf
- 64: Öffnung
- 66: Aufnahme
- 70: zweites Adapterelement
- 72: Führungselement
- 74: Befestigungselement
- 75: Haken
- 76: Einschnitt
- 80: Tablett
- 81: Aufnahme
- 82: Schale
- 84: Befestigungselement
- 86: Haken (federbelastet)
- 88: Haltearm
- 90: Gestell
- 91: Befestigungsabschnitt
- 92: Verbindungsstange
- 94: Holm
- 96: Verbindungsholm
- 98: Kupplungselement
- 100: Schiebevorrichtung
- 102: Strebe
- 104: Verbindungsstrebe
- 106: Einsatz
- 110: Bügel
- 112: Befestigungselement
- 120: Kufe
- 122: Verbindungselement
- 200: Tablet-Computer

- S₁: Schwenkachse
- S₂: Schwenkachse
- S₃: Schwerpunktachse
- S₄: Schwenkachse

## Patentansprüche

1. Liege- oder Sitzeinrichtung für Babys oder Kleinkinder, aufweisend einen Liege- und/oder Sitzabschnitt (42) und einen Befestigungsabschnitt (18; 44), wobei der Befestigungsabschnitt (18; 44) zwei gegenüberliegende erste Adapterelemente (30) aufweist, die sich im Bereich des Schwerpunkts des Liege- oder Sitzabschnitts (42) befinden und mit zweiten Adapterelementen (70) eines Gestells (50; 90) verbindbar sind.

2. Liege- oder Sitzeinrichtung nach Anspruch 1, wobei die ersten Adapterelemente (30) drehbar am Befestigungsabschnitt (18; 44) angeordnet sind und die Drehachse im Wesentlichen im Bereich des Schwerpunkts des Liege- oder Befestigungsabschnitts (18; 44) verläuft.

3. Liege- oder Sitzeinrichtung nach Anspruch 1 oder 2, wobei
- die ersten Adapterelemente (30) jeweils Aufnahmen für Führungselemente (72) der zweiten Adapterelemente (70) und/oder einer Adaptereinrichtung, und
- Aufnahmen für Befestigungselemente (74) der zweiten Adapterelemente (70) und/oder einer Adaptereinrichtung aufweisen.

4. Liege- oder Sitzeinrichtung nach Anspruch 3, wobei die Aufnahmen für die Befestigungselemente (74) Arretierungsabschnitte aufweisen.

5. Gestell, das dazu ausgebildet ist, um mit einer Liege- oder Sitzeinrichtung verbunden zu werden, aufweisend eine Rahmenanordnung und einen Befestigungsabschnitt (58; 91), wobei der Befestigungsabschnitt (58; 91) zwei gegenüberliegende zweite Adapterelemente (70) aufweist, die sich im Bereich einer Schwerpunktebene des Gestells (50; 90) befinden und mit ersten Adapterelementen (30) einer Liege- oder Sitzeinrichtung verbindbar sind.

6. Gestell nach Anspruch 5, wobei die zweiten Adapterelemente (70) jeweils Führungselemente (72) und Befestigungselemente (74) aufweisen.

7. Gestell nach Anspruch 6, aufweisend zwei Führungselemente (72) und zwei Befestigungselemente (74) für jedes zweite Adapterelement (70), wobei die beiden Führungselemente (72) und die beiden Befestigungselemente (74) quer zur Schwerpunktebene hintereinander angeordnet sind.

8. Gestell nach Anspruch 7, wobei die beiden Führungselemente (72) und die beiden Befestigungselemente (74) versetzt zueinander angeordnet sind.

9. Gestell nach Anspruch 7 oder 8, wobei die beiden Führungselemente (72) an Außenstellen der zweiten Adapterelemente (70) und die beiden Befestigungselemente (74) an Innenstellen der zweiten Adapterelemente (70) angeordnet sind.

10. Adaptereinrichtung zur Verbindung einer Liege- oder Sitzeinrichtung mit einem Gestell (50; 90), aufweisend zwei gegenüberliegende und miteinander verbundene dritte Adapterelemente, wobei
- die dritten Adapterelemente einen ersten Befestigungsabschnitt zur Verbindung mit ersten Adapterelementen (30) und einen zweiten Befestigungsabschnitt zur Verbindung mit zweiten Adapterelementen (70) aufweisen,
- der erste Befestigungsabschnitt zwei Führungselemente und zwei Befestigungselemente aufweist, und
- der zweite Befestigungsabschnitt Aufnahmen für Führungselemente (72) der zweiten Adapterelemente (70) und Aufnahmen für Befestigungselemente (74) der zweiten Adapterelemente (70) aufweist.

11. Adaptereinrichtung nach Anspruch 10, wobei die beiden Führungselemente und die beiden Befestigungselemente des ersten Befestigungsabschnitts versetzt zueinander angeordnet sind.

12. Adaptereinrichtung nach Anspruch 10 oder 11, wobei die beiden Führungselemente an Außenstellen der dritten Adapterelemente und die beiden Befestigungselemente an Innenstellen der dritten Adapterelemente angeordnet sind.

13. System, aufweisend eine Liege- oder Sitzeinrichtung nach einem der Ansprüche 1 bis 4 und/oder ein Gestell (50; 90) nach einem der Ansprüche 5 bis 9, wobei die Liege- oder Sitzeinrichtung über die ersten Adapterelemente (30) mit dem Gestell (50; 90) über dessen zweite Adapterelemente (70) verbunden ist.

14. System nach Anspruch 13, wobei die ersten Adapterelemente (30) über eine Adaptereinrichtung nach einem der Ansprüche 10 bis 12 mit den zweiten Adapterelementen (70) verbunden sind.
